# EUROPÄISCHE PATENTSCHRIFT

(11) **EP 3 505 225 B1**
(45) Veröffentlichungstag und Bekanntmachung des Hinweises auf die Patenterteilung: **27.08.2025**
(21) Anmeldenummer: 17210753.4
(22) Anmeldetag: 27.12.2017
(51) Int. Cl.: B01D 1/18, B01D 1/24, B01D 19/00, B01J 2/00, C02F 1/04, C02F 1/26, B01D 9/00, C02F 1/52

(54) **VORRICHTUNG UND VERFAHREN MIT EINEM ABLAUF ZUM ABZUG VON FLÜSSIGEM SALZ**
APPARATUS AND METHOD WITH AN OUTLET FOR EVACUATION OF A FLUIDIC SALT
APPAREIL ET MÉTHODE AVEC UNE SORTIE POUR L'ÉVACUATION DU SEL LIQUIDE

(43) Veröffentlichungstag der Anmeldung: 03.07.2019
(73) Patentinhaber: Christof Global Impact Limited, London EC4M 9AF (GB)
(72) Erfinder: HÜNING, Herbert, 46438 Raesfeld (DE)
(74) Vertreter: Andrejewski - Honke Patent- und Rechtsanwälte Partnerschaft mbB

(56) Entgegenhaltungen:
- CA-A1- 2 094 571
- FR-A1- 2 217 044
- US-A- 2 033 985
- US-A- 3 557 864

## Beschreibung

Die Erfindung betrifft eine Vorrichtung zum Abzug von flüssigem Salz, insbesondere für Anlagen zur Reinigung von Abwässern, mit einem Heizraum, wobei der Heizraum Heizraumwände besitzt, wobei der Heizraum einen Eingang zur Einführung eines salzhaltigen Stoffes aufweist, wobei der Heizraum mit einem Ablauf für eine Salzschmelze verbunden ist, wobei der Ablauf einen Ablaufkanal und ein Ablaufkanalende aufweist, wobei flussabwärts des Ablaufkanalendes ein Kühlbereich zum Kühlen der Salzschmelze vorgesehen ist, wobei der Ablaufkanal wenigstens entlang eines Abschnittes von einer Ablaufwand umlaufend umschlossen ist, wobei der Ablauf ein Heizelement aufweist, wobei wenigstens eine oder mehrere der Heizraumwände Wandrohre aufweist bzw. aufweisen, wobei der Heizraum einen Heizraumbrenner aufweist. Die Erfindung betrifft ferner ein Verfahren mit einer solchen Vorrichtung.

US 2 033 985 A offenbart einen Verdampfer, in welchem Wasserdampf durch das Rohr in den Wärmeaustauschkörper geführt wird und über das Rohrschließlich abgeführt wird. Hierdurch wird die wässrige Salzlösung in dem Verdampfer erwärmt, wodurch das Wasser der Lösung zu einem guten Teil verdampft.

In CA 2 094 571 A1 ist ein Heizraum gezeigt, in welchem sich eine wässrige Salzlösung befindet. Diese wässrige Salzlösung wird mithilfe eines Wärmetauscherelements erwärmt, wodurch der Wasseranteil dieser Lösung zu einem guten Teil verdampft. Der Wärmetauscher bzw. das Heizelement wird mit Wasserdampf betrieben.

US 3,557,864 lehrt eine Vorrichtung zur Verbrennung von salzhaltigen Abwässern, wonach der entstehende Salznebel an den Wänden eines Heizraums kondensiert und in einem unteren Bereich des Heizraums gesammelt wird.

In EP 0 340 616 A1 ist eine Vorrichtung zur Reinigung eines Abwassers beschrieben. Ein salzhaltiger Stoff in Form eines Abwassers wird in einen Heizraum eingeführt, in welchem eine Temperatur oberhalb des Schmelzpunktes des enthaltenen Salzes herrscht. Dabei wird der Wasseranteil schlagartig verdampft, wohingegen der Salzanteil verflüssigt wird. Durch die schlagartige Verdampfung reißt der Wasserdampf das verflüssigte Salz in Form eines Salznebels mit sich. Bei einem nachfolgenden Brennvorgang werden brennbare bzw. organische und oft umweltschädliche Verbindungen in ihre Einzelelemente zerlegt, so dass eine Reinigung stattfindet. Der Salznebel kondensiert an den Wänden des Heizraumes und bildet dort eine Salzschmelze. Die Salzschmelze läuft dann nach unten in ein Becken, welches mit einem Ablauf versehen ist. Der Ablauf weist einen Ablaufkanal sowie ein Ablaufkanalende auf. Über das Ablaufkanalende fällt die Salzschmelze in einen verfahrbaren Aufnahmebehälter. Eine Haube mitsamt Gebläse zieht oberhalb des Ablaufkanalendes ein ebenfalls aus dem Ablauf austretendes Gasgemisch ab. Damit ist allerdings der Ablauf einem kontinuierlichen Luftstrom ausgesetzt, was dazu führt, dass der Ablauf aufgrund von Salzablagerungen zunehmend verstopft und regelmäßig gereinigt werden muss. Somit bedingt das bekannte Verfahren einen erheblichen Wartungsaufwand bzw. eine geringe Betriebsverfügbarkeit.

Der Erfindung liegt daher die technische Aufgabe zugrunde, eine Vorrichtung bzw. ein Verfahren zum Abzug von flüssigem Salz anzugeben, welche bzw. welches einen geringen Wartungsaufwand bzw. eine hohe Betriebsverfügbarkeit bedingt. Insbesondere ist es Aufgabe der vorliegenden Erfindung, Salzablagerungen im Bereich des Ablaufes zu vermeiden.

Zur Lösung der technischen Aufgabe lehrt die Erfindung eine Vorrichtung zum Abzug von flüssigem Salz, insbesondere für Anlagen zur Reinigung von Abwässern, mit einem Heizraum, wobei der Heizraum Heizraumwände besitzt, wobei der Heizraum einen Eingang zur Einführung eines salzhaltigen Stoffes aufweist, wobei der Heizraum mit einem Ablauf für eine Salzschmelze verbunden ist, wobei der Ablauf einen Ablaufkanal und ein Ablaufkanalende aufweist, wobei flussabwärts des Ablaufkanalendes ein Kühlbereich zum Kühlen der Salzschmelze vorgesehen ist, wobei der Ablaufkanal wenigstens entlang eines Abschnittes von einer Ablaufwand umlaufend umschlossen ist, wobei der Ablauf ein Heizelement aufweist, wobei wenigstens eine oder mehrere der Heizraumwände Wandrohre aufweist bzw. aufweisen, wobei der Heizraum einen Heizraumbrenner aufweist.

Vorteilhafterweise umschließt die Ablaufwand den Ablaufkanal umlaufend entlang der vollständigen Länge des Ablaufkanals. Der Ausdruck "Strom" meint insbesondere die Bewegung des Schüttgutes bzw. eines/des Klumpen-Schüttgut-Gemisches bzw. fester Stoffe. Demgegenüber wird eine Bewegung der Salzschmelze vorzugsweise als "Fluss" ausgedrückt. Beispielsweise ist der Heizraum flussaufwärts des Ablaufes angeordnet. Zweckmäßigerweise ist eine/die Fördereinrichtung flussabwärts des Ablaufes befindlich. Der Begriff "Ablaufkanal" meint insbesondere den von der Ablaufwand umschlossenen Hohlraum. Der Begriff "Heizelement" meint insbesondere jegliches bauliche Element, welches dazu dient, die Temperatur in dem Ablauf bzw. Ablaufkanal oberhalb der Schmelztemperatur des/eines Salzes der Salzschmelze zu halten. Beispielsweise ist ein Luftzuführungskanal als Heizelement denkbar, mit welchem heiße Luft dem Ablaufkanal zugeführt werden kann. Darüber hinaus kommen etwa Induktionsheizungen oder Brenner als Heizelemente in Betracht. Das Heizelement ist vorzugsweise ein Brenner (Ablaufbrenner). Es ist zweckmäßig, dass der Ablaufbrenner so in den Ablaufkanal hineinragt, dass eine Ablaufbrennerdüse von der Ablaufwand wenigstens abschnittsweise umschlossen ist. Es ist vorteilhaft, wenn eine Spitze der Ablaufbrennerdüse so in den Ablaufkanal hineinragt, dass sie oberhalb der fließenden Salzschmelze und vorzugsweise oberhalb des Ablaufkanalendes bzw. eines flussabwärtigen Endes der Ablaufrinne bzw. einer Fallöffnung angeordnet ist.

Der Erfindung liegt die Erkenntnis zugrunde, dass insbesondere das Ablaufkanalende hinsichtlich der Salzablagerungen besonders problematisch ist. Ebenso liegt der Erfindung die Erkenntnis zugrunde, dass eine Luftströmung durch den Ablauf in den Heizraum hinein das Problem der Salzablagerungen am Ablaufkanalende weiter verschärft. Es wurde gefunden, dass ein Heizelement allein das Problem der Salzablagerungen allenfalls punktuell löst und dass nur die Kombination von Ablaufwand und Heizelement das Problem der Salzablagerungen im Ablauf löst. So verteilt sich die Wärme des Heizelementes deutlich besser entlang des Ablaufkanals, wenn der Ablaufkanal zugleich von einer Ablaufwand wenigstens entlang eines Abschnittes des Ablaufkanals umlaufend umschlossen ist. Das Heizelement kann mit Hilfe der Ablaufwand die Temperatur im gesamten Ablaufkanal oberhalb der Schmelztemperatur des/eines Salzes der Salzschmelze halten, so dass der Betrieb der Vorrichtung nicht aufgrund von Wartungsarbeiten zwecks Entfernung von erstarrtem Salz unterbrochen werden muss. Damit wird die erfindungsgemäße Aufgabe der Verringerung des Wartungsaufwandes erfüllt und insbesondere die Betriebsverfügbarkeit der Vorrichtung erhöht.

Gemäß einer ganz besonders bevorzugten Ausführungsform weist der Ablauf eine Ablaufrinne auf. Die Ablaufrinne umfasst vorzugsweise ein Metall, weiter vorzugsweise ein Stahlblech und besonders vorzugsweise ein Edelstahlblech. Die Ablaufrinne erstreckt sich bevorzugt zwischen einer/der Wandöffnung einer/der Heizraumwand und dem Ablaufkanalende. Zweckmäßigerweise ist die Ablaufrinne von der Ablaufwand wenigstens teilweise und vorzugsweise vollständig umlaufend umschlossen. Es ist vorteilhaft, wenn die Ablaufrinne innerhalb des Ablaufkanales angeordnet ist. Zweckmäßigerweise stellt die Ablaufrinne eine fluidische Verbindung für den Fluss der Salzschmelze zwischen einer/der Wandöffnung einer/der Heizraumwand des Heizraumes und dem Ablaufkanalende bzw. dem Kühlbereich her. Es ist bevorzugt, dass sich die Ablaufrinne in Flussrichtung und vorzugsweise zum Ablaufkanalende hin verjüngt. Es ist vorteilhaft, dass die Ablaufrinne einen gebogenen Querschnitt aufweist.

Es ist sehr vorteilhaft, wenn der Ablauf so ausgebildet ist, dass innerhalb des Ablaufkanales und unterhalb der im Ablaufkanal fließenden Salzschmelze ein von dem Heizelement ausgehendes erhitztes Gas strömen kann. Vorzugsweise ist der Ablauf so ausgebildet, dass zwischen einem Boden des Ablaufkanales und der Salzschmelze bzw. einer Unterseite der Ablaufrinne ein Abstand bzw. ein Hohlraum vorliegt. Es ist vorteilhaft, wenn ein Stützteil, beispielsweise aus Blech, zwischen dem Boden des Ablaufkanales und der Unterseite der Ablaufrinne zwecks Schaffung eines Abstandes bzw. Hohlraumes angeordnet ist. Vorzugsweise ist ein Hängeteil an der Ablaufrinne abgeordnet und an einer Decke bzw. an einem Deckel des Ablaufes befestigt. Zweckmäßigerweise ist das Stützteil in einem Bereich angeordnet, welcher einer flussabwärtigeren Hälfte der Ablaufrinne zugeordnet ist. Es ist bevorzugt, dass das Hängeteil in einem Bereich des Ablaufes befindlich ist, welcher einer flussaufwärtigeren Hälfte der Ablaufrinne zugeordnet ist. Es ist sehr bevorzugt, dass die Ablaufrinne in dem Ablauf bzw. in dem Ablaufkanal so angeordnet ist, dass sie wenigstens entlang eines Abschnittes und vorzugsweise entlang der vollständigen Länge der Ablaufrinne von durch das Heizelement erhitztem Gas im Querschnitt allseitig umspült werden kann. Es versteht sich, dass der Ausdruck "entlang der vollständigen Länge der Ablaufrinne allseitig umspült" Hänge- bzw. Stützteile nicht ausschließt.

Es ist besonders bevorzugt, dass der Ablauf bzw. der Ablaufkanal bzw. das Ablaufkanalende einen Siphon zur Vermeidung eines Außenlufteintrittes in den Ablaufkanal aufweist. Vorzugsweise ist der Siphon im Ablaufkanalende angeordnet. Zweckmäßigerweise umfasst die Ablaufwand eine Öffnung, in welche Öffnung der Siphon eingesetzt ist. Die Öffnung in der Ablaufwand befindet sich vorzugweise an einer Unterseite des Ablaufes. Gemäß einer besonders bevorzugten Ausführungsform ist der Siphon beheizbar und weiter vorzugsweise elektrisch beheizbar. Sehr vorzugsweise wird der Siphon mittels Induktionsheizung elektrisch beheizt. Es ist möglich, dass der Siphon eine elektrische Widerstandsheizung aufweist. Der Siphon umfasst vorzugsweise einen Eingangsbereich und einen Ausgangsbereich. Zweckmäßigerweise ist der Eingangsbereich des Siphons von dem Ausgangsbereich des Siphons über ein Sammelbecken zur Sammlung von Salzschmelze getrennt. Vorteilhafterweise sind der Ablaufkanal bzw. die Ablaufrinne bzw. der Siphon so ausgebildet, dass die Salzschmelze in den Eingangsbereich des Siphons fließt und dadurch das Sammelbecken füllt. Zweckmäßigerweise umfasst das Sammelbecken ausgangsseitig eine Überlaufwand, so dass das Sammelbecken bis zu einem durch die Überlaufwand definierten Pegel mit Salzschmelze füllbar ist. Der Siphon ist zweckmäßigerweise so ausgebildet, dass bei einem Überlaufen der Salzschmelze über die Überlaufwand die Salzschmelze an der Überlaufwand herunterrinnt und vorzugsweise sich ab dann in einem freien Fall befindet. Der Siphon umfasst vorteilhafterweise eine Deckenwand, welche zusammen mit dem Sammelbecken bzw. der in dem Sammelbecken befindlichen Salzschmelze den Eingangsbereich von dem Ausgangsbereich des Siphons trennt. Die Deckenwand weist bevorzugt eine untere Kante auf, welche ein geringeres Höhenniveau aufweist als die obere Kante der Überlaufwand. Die Deckenwand weist zweckmäßigerweise einen durch das Höhenniveau der oberen Kante der Überlaufwand definierten Tauchabschnitt sowie einen darüberliegenden Gastrennabschnitt auf. Die Überlaufwand ist an ihrem unteren Ende bevorzugt mit einer Bodenwand des Siphons befestigt. Zweckmäßigerweise umfasst der Siphon eine Außenwand, welche an Rändern der Öffnung des Ablaufes anliegt. Zweckmäßigerweise bilden die Bodenwand, die Außenwand sowie die Überlaufwand das Sammelbecken. Vorzugsweise umschließt die Außenwand die Deckenwand, die Überlaufwand sowie die Bodenwand.

Es ist möglich, dass der Kühlbereich von einem Gehäuse umgeben ist, wobei der Ablauf bzw. das Ablaufkanalende an das Gehäuse angeschlossen ist. Vorzugsweise ist der Ablauf bzw. das Ablaufkanalende über ein Anschlusselement - insbesondere über ein Fallrohr - mit dem Gehäuse verbunden. Es ist bevorzugt, dass das Gehäuse eine/die Streuöffnung, eine/die Fördereinrichtung, eine/die Scheidewand und/oder eine/die Trennvorrichtung umschließt. Das Gehäuse ist vorzugsweise unterhalb des Ablaufes bzw. Ablaufkanalendes angeordnet. Das Gehäuse bzw. das Anschlusselement ist vorzugsweise dazu ausgebildet einen - beispielsweise durch ein Gebläse im Heizraum erzeugten - Unterdruck im Kühlbereich zu ermöglichen.

Gemäß einer ganz besonders bevorzugten Ausführungsform umfasst die Ablaufwand eine keramische Schicht. Die keramische Schicht weist zweckmäßigerweise eine Stärke von wenigstens 15cm bzw. 20cm auf. Es ist möglich, dass die keramische Schicht eine Stärke von höchstens 40cm bzw. 35cm bzw. 30cm aufweist. Es ist bevorzugt, dass die keramische Schicht eine Innenschicht der Ablaufwand bildet. Vorzugsweise umfasst die Ablaufwand eine metallische Außenschicht, welche beispielsweise aus Stahl besteht. Die metallische Außenschicht weist eine Stärke von zweckmäßigerweise wenigstens 3mm/4mm/5mm und zweckmäßigerweise von höchstens 12mm/10mm/8mm auf. Die keramische Schicht der Ablaufwand kann beispielsweise gemauert oder integral ausgebildet sein. Die keramische Schicht ist bevorzugt für Temperaturen von wenigstens 800 °C/900 °C/1.000 °C/ 1.100 °C ausgebildet.

Es ist bevorzugt, dass der Ablauf bzw. das Ablaufkanalende bzw. die Ablaufrinne eine Fallöffnung aufweist. Der Begriff "Fallöffnung" meint insbesondere, dass ab dieser Öffnung die Salzschmelze nicht mehr in Kontakt ist mit dem Ablauf bzw. dem Ablaufkanal bzw. der Ablaufrinne und sich zugleich in einem freien Fall befindet. Es ist bevorzugt, dass sich ein Hauptabschnitt des Ablaufkanals auf seiner Innenseite in Richtung der Fallöffnung verjüngt. Zweckmäßigerweise findet die Verjüngung in beide horizontale Richtungen statt. Es ist möglich, dass unterhalb der Fallöffnung ein Fallrohr angeordnet ist, wobei das Fallrohr vorteilhafterweise ein Metall umfasst. Zweckmäßigerweise besitzt das Fallrohr an seinem unteren Ende einen Flansch zur Verbindung mit dem/einen Gehäuse für die Einhausung des Kühlbereiches.

Vorteilhafterweise ist der Ablauf an einer seitlichen Heizraumwand bzw. an einer Außenseite einer seitlichen Heizraumwand des Heizraumes angeordnet. Es ist vorteilhaft, wenn der Ablauf bezüglich der seitlichen Heizraumwand vorsteht. Zweckmäßigerweise ist der Ablauf an einem unteren Ende der seitlichen Heizraumwand befestigt. Es liegt im Rahmen der Erfindung, dass ein Boden des Heizraumes zu dem Ablauf hin abschüssig ausgebildet ist. Zweckmäßigerweise ist der Heizraum bzw. der Boden des Heizraumes über eine Wandöffnung in der seitlichen Heizraumwand mit dem Ablauf bzw. dem Ablaufkanal bzw. der Ablaufrinne fluidisch verbunden. Es ist zweckmäßig, wenn die Wandöffnung gegenüber dem Boden des Heizraumes erhöht angeordnet ist.

Dem Kühlbereich bzw. dem Gehäuse kann wenigstens eine Druckschleuse zur Aufrechterhaltung eines Unterdruckes im Kühlbereich zugeordnet sein. Es ist bevorzugt, dass die Druckschleuse als Zellenradschleuse ausgestaltet ist. Es ist zweckmäßig, dass der Kühlbereich bzw. das Gehäuse so ausgebildet ist, dass vorzugsweise feste Stoffe mittels der Druckschleuse bzw. den Druckschleusen aus dem Kühlbereich herausführbar sind. Es liegt im Rahmen der Erfindung, dass das Gehäuse bzw. der Kühlbereich wenigstens mit einer Ausgangsdruckschleuse für ein/das Schüttgut verbunden ist. Es ist bevorzugt, dass eine zweite Ausgangsdruckschleuse für Klumpen erstarrter Salzschmelze vorgesehen ist. Es ist bevorzugt, dass der Kühlbereich bzw. das Gehäuse bzw. die Streuöffnung eine Zellenradschleuse für eine Einführung des Schüttgutes in das Gehäuse bzw. für ein Bestreuen der/einer Fördereinrichtung aufweist.

Vorzugsweise weist der Ablauf bzw. eine Decke des Ablaufes einen abnehmbaren Deckel auf. In einem eingebauten Zustand des Deckels bedeckt der Deckel insbesondere wenigstens abschnittsweise einen/den Hauptabschnitt bzw. eine/die Fallöffnung des Ablaufkanalendes. Der Deckel bedeckt in einem eingebauten Zustand zweckmäßigerweise wenigstens einen Abschnitt, vorzugsweise einen flussabwärtigeren Abschnitt, einer/der Ablaufrinne. Es ist sehr bevorzugt, dass an dem Deckel eine oder mehrere Apparaturen angeordnet sind. Apparaturen können beispielsweise Schauöffnungen, Heizelemente, Sensoren oder Reinigungsvorrichtungen sein. Vorzugsweise umfasst der Deckel eine metallische Außenschicht, welche beispielsweise aus Stahl und vorzugsweise aus Stahlblech besteht. Es ist bevorzugt, dass der Deckel eine keramische Schicht, vorzugsweise eine keramische Innenschicht, aufweist. Diese keramische Innenschicht des Deckels kann beispielsweise gemauert oder integral ausgebildet sein.

Gemäß einer vorteilhaften Ausführungsform weist der Ablauf wenigstens einen Temperatursensor und vorzugsweise zwei Temperatursensoren auf. Der wenigstens eine Temperatursensor ist vorzugsweise an das Heizelement bzw. den Ablaufbrenner gekoppelt, so dass der wenigstens eine Temperatursensor und das Heizelement eine Regelschleife bilden. Bevorzugt umfasst der Ablauf einen Wandtemperatursensor zur Erfassung der Temperatur in der Ablaufwand und insbesondere in einem Boden der Ablaufwand. Es ist bevorzugt, dass der Ablauf einen Kanaltemperatursensor zur Erfassung der Temperatur in dem Ablaufkanal aufweist. Zweckmäßigerweise umfasst der Ablauf einen Drucksensor zwecks Ermittlung des Gasdruckes in dem Ablaufkanal. Es ist vorteilhaft, wenn der Kanaltemperatursensor und/oder der Drucksensor eine Decke des Ablaufes durchgreifen.

Es ist im Rahmen der Erfindung, dass der Ablauf eine Reinigungsvorrichtung umfasst. Die Reinigungsvorrichtung ist vorzugsweise so ausgebildet, dass der Reinigungsvorgang rein mechanischer Art ist. Es ist bevorzugt, dass die Reinigungsvorrichtung einen Stößel aufweist, welcher dazu ausgebildet ist, Salzablagerungen im Bereich des Ablaufkanals und insbesondere im Bereich des Ablaufkanalendes zu zertrümmern bzw. präventiv zu verhindern. Vorzugsweise ragt die Reinigungsvorrichtung durch die Ablaufwand und bevorzugt durch eine Decke der Ablaufwand hindurch. Es ist vorteilhaft, wenn die Reinigungsvorrichtung auf das Ablaufkanalende hin gerichtet ist. Zweckmäßigerweise ist die Reinigungsvorrichtung motorisch angetrieben. Vorteilhafterweise ist die Reinigungsvorrichtung ausgebildet, in regelmäßigen Zeitabständen in den Bereich des Ablaufkanalendes bzw. der Fallöffnung bzw. eines Endes der Ablaufrinne hineinzustoßen. Vorzugsweise ist die Reinigungsvorrichtung ausgebildet, mechanischen Widerstand durch zähflüssigere Salzschmelze beim Hineinstoßen in den Bereich des Ablaufkanalendes bzw. des Hauptbereiches bzw. der Fallöffnung zu detektieren. Zweckmäßigerweise ist die Reinigungsvorrichtung ausgebildet, im Falle zähflüssigerer Salzschmelze so lange hineinzustoßen, bis der mechanische Widerstand nicht mehr detektiert wird.

Es ist von Vorteil, dass der Ablauf wenigstens eine Schauöffnung und vorzugsweise zwei Schauöffnungen aufweist. Es ist bevorzugt, dass die wenigstens eine Schauöffnung so ausgebildet ist, dass der Ablaufkanal und insbesondere das Ablaufkanalende beobachtet werden kann. Die wenigstens eine Schauöffnung ist bevorzugt an einer Decke der Ablaufwand und vorzugsweise oberhalb des Ablaufkanalendes angeordnet. Vorzugsweise umfasst der Ablauf eine zweite Schauöffnung für die Beobachtung eines vorzugsweise mittleren Bereiches der Ablaufrinne. Es ist zweckmäßig, dass die zweite Schauöffnung an einer Decke des Ablaufes bzw. der Ablaufwand angeordnet ist. Eine dritte Schauöffnung kann an einer Seite des Fallrohres zwecks Beobachtung des Inneren des Fallrohres angeordnet sein.

Der Heizraumbrenner bzw. der Eingang zur Einführung des salzhaltigen Stoffes ist/sind so ausgerichtet, dass ein Strahl des salzhaltigen Stoffes auf eine Brennflamme des Heizraumbrenners gerichtet ist. Der Heizraumbrenner ist vorzugsweise so ausgebildet, dass - insbesondere mit Hilfe von brennbaren Anteilen in dem salzhaltigen Stoff - eine Temperatur von wenigstens 600 °C/700 °C/800 °C/900 °C erreicht wird. Zweckmäßigerweise erreicht der Heizraumbrenner eine Temperatur von höchstens 1.600 °C/1.400 °C/1.200 °C. Es ist bevorzugt, dass der Brenner an einem flussaufwärtigen Ende des Heizraumes angeordnet ist.

Die Heizraumwände bzw. Heizraumwand bzw. Wandrohre sind sehr bevorzugt so ausgebildet, dass eine Temperatur von höchstens 320 °C/300 °C/280 °C an den Heizraumwänden bzw. an der Heizraumwand auftritt. Es ist bevorzugt, dass eine Temperatur an der Heizraumwand bzw. an den Heizraumwänden wenigstens 150 °C/175 °C beträgt. Die Wandrohre können beispielsweise an einer Außenseite der Heizraumwand/-wände angeordnet sein oder aber die Heizraumwand/-wände selbst bilden.

Gemäß einer ganz besonders bevorzugten Ausführungsform umfasst der Heizraum ausgangsseitig ein Gebläse zwecks Absaugung eines Gases bzw. Gasgemisches aus dem Heizraum. Vorzugsweise ist das Gebläse bzw. die Vorrichtung bzw. der Heizraum bzw. der Kühlbereich so ausgebildet, dass sich im Heizraum bzw. im Ablauf bzw. im Kühlbereich ein Unterdruck bildet.

Sehr vorzugsweise ist unterhalb des Ablaufkanalendes eine Fördereinrichtung angeordnet, so dass die Salzschmelze auf die Fördereinrichtung fallen kann. Die Fördereinrichtung ist bevorzugt Bestandteil des Kühlbereiches. Zweckmäßigerweise bestimmt die Fördereinrichtung eine Stromrichtung mit einem vorzugsweise waagerechten Richtungsanteil. Es ist vorteilhaft, wenn stromaufwärts des Ablaufkanalendes und oberhalb der Fördereinrichtung eine Streuöffnung zum Bestreuen der Fördereinrichtung mit einem Schüttgut angeordnet ist. Zweckmäßigerweise ist die Vorrichtung bzw. die Streuöffnung bzw. die Fördereinrichtung so ausgebildet, dass das Schüttgut ein Schüttgutbett auf der Fördereinrichtung bildet. Zweckmäßigerweise weist das Schüttgut bzw. das Schüttgutbett auf der Fördereinrichtung eine Temperatur auf, so dass die auf das Schüttgutbett fallende Salzschmelze noch auf der Fördereinrichtung in dem Schüttgutbett zu Klumpen erstarrt. Vorzugsweise ist stromabwärts der Fördereinrichtung ein Klumpen-Schüttgut-Gemisch-Ausgang eines/des Gehäuses - vorzugsweise mit einer Zellenradschleuse - vorgesehen. Stromabwärts des Klumpen-Schüttgut-Gemisch-Ausganges ist bevorzugt eine Trennvorrichtung angeordnet. Die Trennvorrichtung ist vorzugsweise so ausgebildet, dass das Schüttgut von den Klumpen erstarrter Salzschmelze, wenigstens teilweise und vorzugsweise weitestgehend, trennbar ist. Es ist bevorzugt, dass unterhalb der Fördereinrichtung ein Schüttgutsammler angeordnet ist, wobei der Schüttgutsammler beispielsweise ein Schneckenförderer ist. Es ist möglich, dass zwischen einem stromabwärtigen Ende des Schüttgutsammlers und einer Eingangsseite der Streuöffnung eine Rückförderstrecke zur Rückförderung des Schüttgutes angeordnet ist. Die Rückförderstrecke mag beispielsweise pneumatisch betrieben sein. Es ist möglich, dass die Rückförderstrecke eine Kühleinrichtung zur Abkühlung des Schüttgutes aufweist. Vorteilhafterweise weist die Vorrichtung ein Schüttgutsilo zur Aufnahme des Schüttgutes auf, wobei vorzugsweise das Schüttgutsilo ausgangsseitig mit der Streuöffnung verbunden ist. Bevorzugt ist zwischen dem Schüttgutsilo und der Streuöffnung ein Element zur Steuerung / Regelung einer Stromgeschwindigkeit des Schüttgutes, vorzugsweise eine Zellenradschleuse, angeordnet. Die Rückförderstrecke ist vorzugsweise zwischen Schüttgutsammler bzw. Gehäuse einerseits und Schüttgutsilo andererseits angeordnet.

Zur Lösung der technischen Aufgabe lehrt die Erfindung ein Verfahren zum Abzug von flüssigem Salz, insbesondere mit einer erfindungsgemäßen Vorrichtung, wobei eine Salzschmelze entlang eines Ablaufkanals eines Ablaufes bis zu einem Ablaufkanalende des Ablaufes fließt, wobei stromabwärts des Ablaufkanalendes die Salzschmelze in einem Kühlbereich bis wenigstens zur Erstarrung gekühlt wird, wobei der Ablauf ein Heizelement aufweist, vorbei das Heizelement - vorzugsweise bei Bedarf und weiter vorzugsweise lediglich bei Bedarf - dem Ablauf bzw. Ablaufkanal zur Vermeidung von Salzablagerungen Wärme zuführt.

Zweckmäßigerweise umfasst die Vorrichtung einen Heizraum. Es ist vorteilhaft, wenn der Heizraum einen Eingang zur Einführung eines salzhaltigen Stoffes aufweist. Es ist bevorzugt, dass der Ablaufkanal wenigstens entlang eines Abschnittes von einer Ablaufwand umlaufend umschlossen ist.

Es ist sehr bevorzugt, dass die Salzschmelze im Ablaufkanal entlang einer Ablaufrinne geführt wird, wobei die Ablaufrinne zumindest entlang eines Abschnittes und vorzugsweise entlang ihrer gesamten Länge voll umfänglich von durch das Heizelement erhitzten Gas umspült wird. Es ist von Vorteil, wenn die Ablaufrinne ein Metall, vorzugsweise einen Stahl und besonders vorzugsweise einen Edelstahl aufweist. Aufgrund der guten Wärmeleitfähigkeit von Metall erzielt die Umspülung mit erhitztem Gas schnell eine thermische Wirkung auf die Salzschmelze.

Nachfolgend wird die Erfindung anhand einer ein Ausführungsbeispiel darstellenden Zeichnung näher erläutert. Es zeigen in schematischer Darstellung:
- Fig. 1: einen Längsschnitt durch einen oberen Teil einer erfindungsgemäßen Vorrichtung umfassend einen Heizraum mit einem Ablauf,
- Fig. 2: eine symbolisch gehaltene Darstellung eines unteren Teiles der erfindungsgemäßen Vorrichtung,
- Fig. 3: einen Längsschnitt in vergrößerter Darstellung des erfindungsgemäßen Ablaufes aus Fig. 1,
- Fig. 4: einen Querschnitt durch den Ablauf aus Fig. 1 und
- Fig. 5: eine Draufsicht des Ablaufes der Fig. 1, 3 und 4.

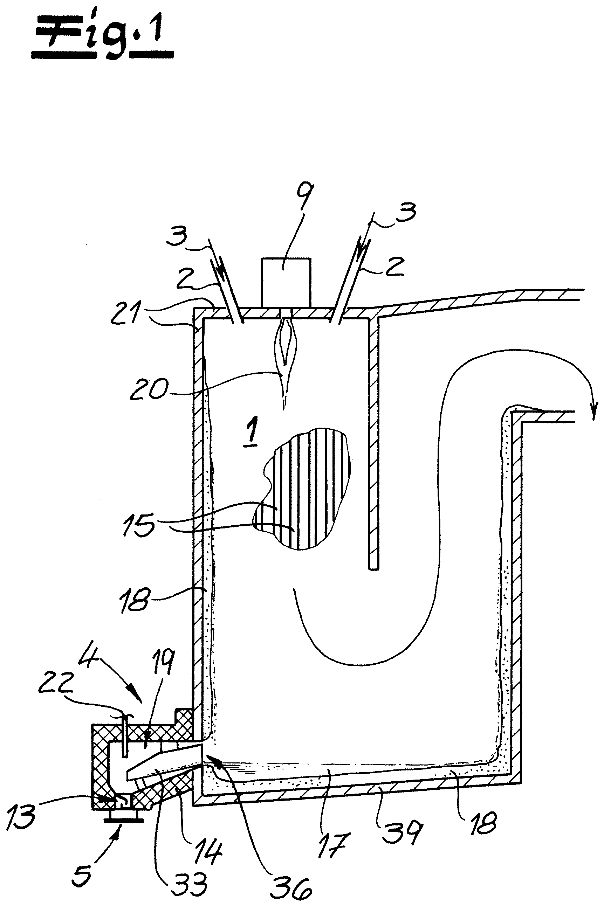

In Fig. 1 ist ein Heizraum 1 zwecks Reinigung von salzhaltigen Stoffen 3 in Form von industriellen Abwässern gezeigt. Der salzhaltige Stoff 3 wird über mehrere Eingänge 2 zur Einführung des salzhaltigen Stoffes 3 in den Heizraum 1 eingespritzt. Die Eingänge 2 sind so ausgerichtet, dass der salzhaltige Stoff 3 auf eine Brennflamme 20 eines Brenners 9 gelenkt wird. Der salzhaltige Stoff 3 umfasst sowohl Wasser, Salz sowie brennbare Anteile. Die brennbaren Anteile werden durch die Brennflamme 20 verbrannt, wohingegen der Wasseranteil schlagartig verdampft. Aufgrund einer Temperatur über 800 °C wird das Salz verflüssigt und wegen der schlagartigen Wasserverdampfung als Salznebel vom Wasserdampf mitgerissen.

Der Heizraum 1 weist Heizraumwände 21 mit mit Wasserdampf gefüllten Wandrohren 15 auf, welche die Heizraumwände 21 auf einer Temperatur von etwa 200 bis 300 °C halten. Hierdurch kondensiert und erstarrt das Salz an der Innenseite der Heizraumwände 21, so dass sich eine Salzwand 18 bildet. Die Salzwand 18 wächst etwa 20 bis 30mm nach innen, bis die Wärmeisolation der Salzwand 18 so groß ist, dass die Oberfläche der Salzwand 18 beständig flüssig bleibt. Auf diese Weise fließt laufend eine Salzschmelze 17 die Salzwand 18 herunter und sammelt sich an einem leicht abschüssigen Boden 39 des Heizraumes 1. An einem ausgangsseitigen Ende des Heizraumes 1 ist ein nicht dargestelltes Gebläse angeordnet, welches den nun in einem geringeren Umfange salzhaltigen Wasserdampfstrom absaugt, so dass innerhalb des Heizraumes 1 ein leichter Unterdruck herrscht.

Die Salzschmelze 17 kann über einen Ablauf 4 aus dem Heizraum 1 abfließen, weil eine Heizraumwand 21 eine Wandöffnung 36 aufweist. Der Ablauf 4 besitzt eine Ablaufwand 14, welche einen Ablaufkanal 19 in Form eines Hohlraumes definiert. Innerhalb des Ablaufkanals 19 ist eine Ablaufrinne 33 angeordnet, welche von der Wandöffnung 36 bis zu einem Ablaufkanalende 5 mit einer Fallöffnung reicht. Die Salzschmelze 17 fließt von der Wandöffnung 36 entlang der Ablaufrinne 33 zu dem Ablaufkanalende 5, in welchem sich ein Siphon 13 befindet. Der Siphon 13 verhindert einen Außenlufteintritt in das Ablaufkanalende 5, lässt aber gleichzeitig den Austritt der Salzschmelze 17 zu. Auf diese Weise herrscht auch in dem Ablauf 4 ein leichter Unterdruck wie im Heizraum 1, so dass ein beständiger Luftstrom durch den Ablauf 4 hindurch in den Heizraum 1 hinein verhindert und die Wahrscheinlichkeit von Salzablagerungen dort verringert wird. Die Salzschmelze 17 fällt nach dem Austritt aus dem Siphon 13 dann in einen unteren Teil der Vorrichtung.

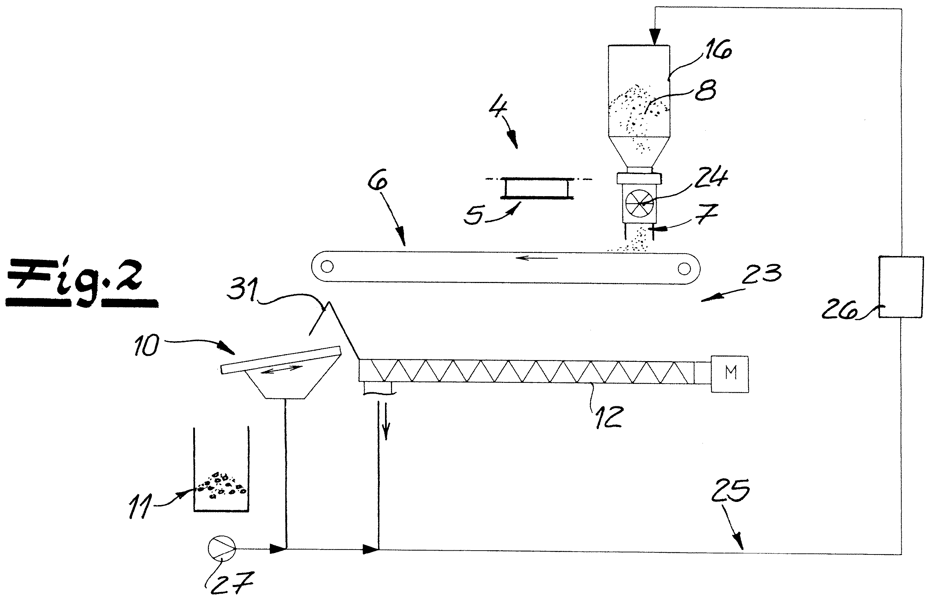

In Fig. 2 ist der untere Teil der Vorrichtung zum Abzug von flüssigem Salz symbolisch dargestellt. Zentraler Bereich des unteren Teils ist ein Kühlbereich 23, weil innerhalb des Kühlbereiches 23 die Salzschmelze 17 bis zur Erstarrung abgekühlt wird. Der Kühlbereich 23 umfasst hauptsächlich eine Fördereinrichtung 6. Der Ablauf 4 ist in Fig. 2 nur angedeutet und oberhalb der Fördereinrichtung 6 angeordnet. Die Fördereinrichtung 6 in Form eines Endlosförderbandes definiert eine Stromrichtung, welche in diesem Ausführungsbeispiel rein waagerecht verläuft. Stromaufwärts des Ablaufkanalendes 5 ist eine Streuöffnung 7 angeordnet, aus welcher ein Schüttgut 8, beispielsweise Sand, auf die Fördereinrichtung 6 gestreut wird. Dabei ist die Stromgeschwindigkeit des herausfallenden Schüttgutes 8 so bemessen, dass sich auf der Fördereinrichtung 6 ein Schüttgutbett von ausreichender Höhe (beispielsweise 10 cm) bildet. Die Fördereinrichtung 6 weist hierzu zwei nicht dargestellte Seitenwände auf, welche ortsfest sind und das Schüttgutbett fixieren. Die unterhalb des Ablaufkanalendes 5 dann auf das Schüttgutbett fließende bzw. tropfende Salzschmelze 17 erstarrt noch in dem Schüttgutbett, ohne den Boden der Fördereinrichtung 6 zu erreichen. Die in dem Schüttgutbett erstarrte Salzschmelze 17 bildet innerhalb des Schüttgutbettes Klumpen erstarrter Salzschmelze.

In Fig. 2 ist weiter zu erkennen, dass ein unterhalb der Fördereinrichtung 6 angeordneter Schüttgutsammler 12 in Form einer Förderschnecke von der Fördereinrichtung 6 herunterrieselndes Schüttgut 8 sammelt und dieses kann von dort bedarfsweise mittels eines Gebläses 27 über eine pneumatische Rückförderstrecke 25 zurück zu einem Schüttgutsilo 16 befördert werden. Entlang der Rückförderstrecke 25 befindet sich außerdem auch eine Kühleinrichtung 26, welche bei Bedarf das Schüttgut auf eine Aufgabetemperatur herunterkühlt. Das Schüttgutsilo 16 ist ausgangsseitig mit einer Zellenradschleuse 24 verbunden, deren Drehzahl steuerbar ist, wodurch auch eine Stromgeschwindigkeit des Schüttgutes 8 einstellbar ist. Die Zellenradschleuse 24 am ausgangsseitigen Ende des Schüttgutsilos 16 ist der Streuöffnung 7 zugeordnet und bestimmt daher maßgeblich die Ausprägung des Schüttgutbettes.

Am Ende der Fördereinrichtung 6 fallen die Klumpen und das Schüttgut 8 in eine Trennvorrichtung 10. Eine Scheidewand 31 verhindert, dass die Klumpen in den Schüttgutsammler 12 fallen. Die Trennvorrichtung 10 dieses Ausführungsbeispiels ist eine leicht schräg angeordnete Schwingrinne mit einem Bodensieb, wobei die Löcher des Bodensiebes so dimensioniert sind, dass zwar das Schüttgut 8, nicht aber die Klumpen erstarrter Salzschmelze hindurchfallen. Am linken Ende der Trennvorrichtung 10 fallen die Klumpen erstarrter Salzschmelze in ein Klumpenbehältnis 11, welches beispielsweise ein Container oder ein Big Bag ist. Das durch die Trennvorrichtung 10 hindurchfallende Schüttgut 8 hingegen wird von einem Trichter eingesammelt und der Rückförderstrecke 25 zugeführt.

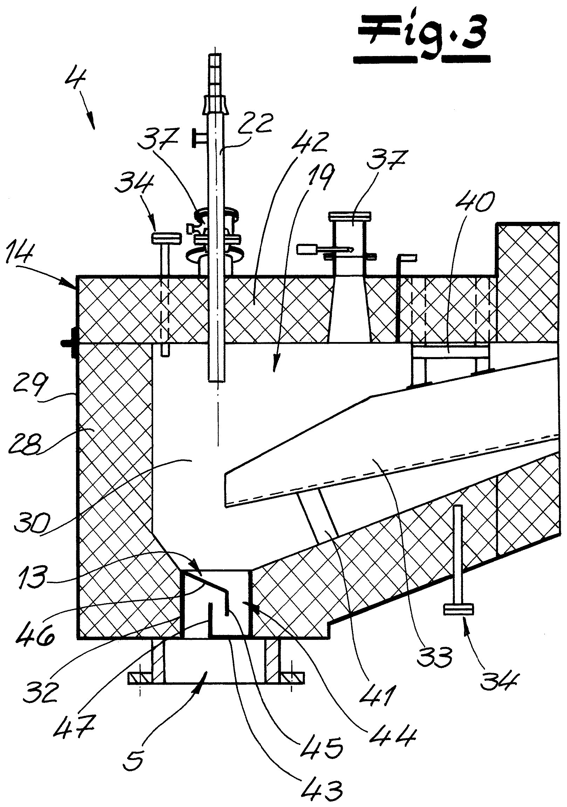

In Fig. 3 ist ein Längsschnitt des Ablaufes 4 vergrößert dargestellt. So weist die Ablaufwand 14 eine metallische Außenschicht 29 auf, welche vorzugsweise aus Stahlblech besteht. Ferner umfasst die Ablaufwand 14 eine hitzebeständige, keramische Innenschicht 28, welche beispielsweise 25 cm stark ist. Die Außenschicht 29 aus Stahlblech ist beispielsweise 6 mm dick. Die Ablaufrinne 33 führt zu einem Hauptabschnitt 30 des Ablaufes 4, welcher sich nach unten hin verjüngt. Die Ablaufrinne 33 wird durch ein Hängeteil 40 zwischen einer Decke des Ablaufkanales 19 und der Ablaufrinne 33 sowie durch ein Stützteil 41 zwischen einem Boden des Ablaufkanales 19 und der Ablaufrinne 33 getragen. Hierdurch liegt die Ablaufrinne 33 nicht auf dem Boden des Ablaufkanales 19 an. In der Folge kann von dem Heizelement 22 erhitztes Gas die Ablaufrinne 33 von allen Seiten umspülen. Im Ergebnis wird so die Gefahr von Salzablagerungen verringert. Außerdem kann die Ablaufrinne 33 im Falle einer zu starken Korrosion leicht ausgewechselt werden.

In Fig. 3 ist ferner zu erkennen, dass das Heizelement 22 in Form eines Ablaufbrenners die Decke des Ablaufes 4 durchgreift und eine Düse des Ablaufbrenners auf das Ablaufkanalende 5 hin gerichtet ist. Ebenso durchgreift ein Temperatursensor 34 die Decke des Ablaufes 4, so dass die Spitze des Temperatursensors 34 in den Ablaufkanal 19 bzw. in den Hauptbereich 30 hineinragt. Ein weiterer Temperatursensor 34 befindet sich in einem Abschnitt der Ablaufwand 14 unterhalb der Ablaufrinne 33. Dieser Temperatursensor 34 durchgreift nicht die Ablaufwand 14, so dass die Spitze dieses Temperatursensors 34 die Temperatur der Ablaufwand 14 im Bereich des Bodens des Ablaufkanals 19 erfasst. Der Ablauf 4 bzw. die Decke des Ablaufes 4 weist einen abnehmbaren Deckel 42 auf. Sowohl der die Decke des Ablaufes 4 durchgreifende Temperatursensor 34 als auch das Heizelement 22 sind an dem Deckel 42 angeordnet. Außerdem sind im Deckel 42 zwei Schauöffnungen 37 befindlich, wobei die erste Schauöffnung 37 auf das Ablaufkanalende 5 und die zweite Schauöffnung 37 auf einen mittleren Abschnitt der Ablaufrinne 33 hin gerichtet ist.

Fig. 3 zeigt außerdem den Aufbau des Siphons 13. Der Siphon 13 befindet sich in einer Öffnung an einer Unterseite des Ablaufes, wobei eine Außenwand 32 des Siphons an einer Innenseite der Öffnung der Ablaufwand 14 anliegt. An einem oberen Rand der Außenwand 32 ist eine Deckenwand 44 befestigt, wobei die Deckenwand 44 einen unteren Tauchabschnitt 45 sowie einen oberen Gastrennabschnitt 46 umfasst. An einem unteren Rand der Außenwand 32 ist eine Bodenwand 43 befestigt, von welcher aus sich nach oben eine Überlaufwand 47 erstreckt. Ein oberer Rand der Überlaufwand 47 liegt höher als ein unterer Rand der Deckenwand 44 bzw. des Tauchabschnittes 45. Die Salzschmelze 17 fließt die Ablaufrinne 33 entlang und fällt dann auf den Gastrennabschnitt 46 der Deckenwand 44. Von dort rinnt sie in ein von der Außenwand 32, der Bodenwand 43 und der Überlaufwand 47 definiertes Sammelbecken des Siphons. Das Sammelbecken des Siphons füllt sich mit der Salzschmelze 17, bis der Pegel der Salzschmelze 17 in dem Sammelbecken den oberen Rand der Überlaufwand 47 erreicht hat. Dann rinnt die Salzschmelze 17 an einer Außenseite der Überlaufwand 47 die Überlaufwand 47 hinunter und fällt von dort nach unten auf die Fördereinrichtung 6. Weil der untere Rand des Tauchabschnittes 45 tiefer liegt als der obere Rand der Überlaufwand 47, und weil der Gastrennabschnitt 46 einen Gaseintritt bzw. Außenlufteintritt in den Ablaufkanal 19 verhindert, ist gewährleistet, dass die Salzschmelze 17 zwar aus dem Siphon austreten, nicht aber eine Außenluft in den Ablaufkanal 19 eintreten kann. Zur Vermeidung von Salzablagerungen im Siphon 13 wird der Siphon 13 mittels einer hier nicht dargestellten Induktionsheizung elektrisch beheizt.

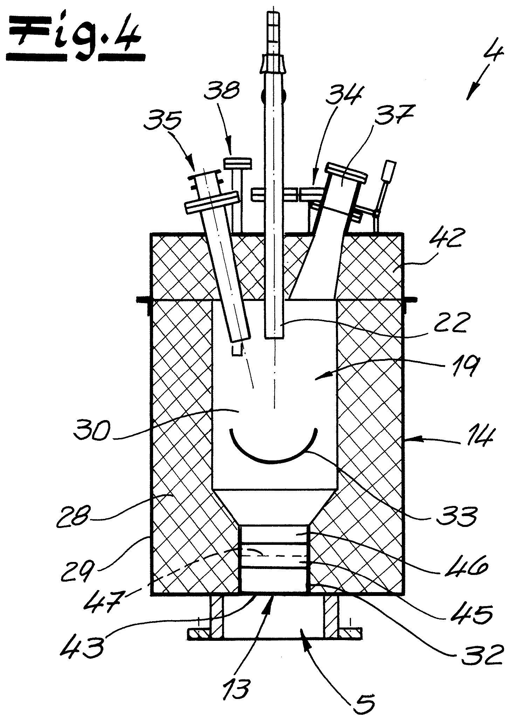

In Fig. 4 ist der Ablauf 4 aus Fig. 3 in einem Querschnitt dargestellt, wobei die Blickrichtung dieses Querschnittes von den Heizraumwänden 21 weg gerichtet ist. Das Heizelement 22 ist auch in diesem Schnitt auf das Ablaufkanalende 5 hin gerichtet, so dass das Heizelement 22 aufgrund seiner Anordnung unmittelbar oberhalb des Ablaufkanalendes 5 die Decke des Ablaufes 4 bzw. den Deckel 42 etwa senkrecht durchgreift. In diesem Querschnitt ist ferner eine mechanische Reinigungsvorrichtung 35 zu erkennen, welche neben dem Heizelement 22 befindlich ist und ebenfalls auf das Ablaufkanalende 5 hin gerichtet ist, woraus sich eine im Vergleich zum Heizelement 22 schräge Anordnung ergibt. Die Reinigungsvorrichtung 35 ist als motorisch betriebener Stößel ausgebildet, welcher zähflüssige Salzschmelze 17 im Bereich des Ablaufkanalendes 5 an einer Erstarrung hindern kann. Außerdem ist die Reinigungsvorrichtung 35 in der Lage, einen durch zähflüssige Salzschmelze 17 hervorgerufenen leichten mechanischen Widerstand zu detektieren. Beispielsweise einmal stündlich fährt die Reinigungsvorrichtung 35 in das Ablaufkanalende 5. Im Falle eines Widerstandes stößt die Reinigungsvorrichtung 35 nach, bis sich der Widerstand auflöst. Dabei kann die Reinigungsvorrichtung 35 von dem Heizelement 22 unterstützt werden.

Diametral der Reinigungsvorrichtung 35 gegenüberliegend angeordnet befindet sich die in Fig. 4 nun besser sichtbare erste Schauöffnung 37, welche den Blick auf das Ablaufkanalende 5 bzw. auf das Ende der Ablaufrinne 33 freigibt. Hierüber können Salzablagerungen bzw. eine zähflüssige Salzschmelze bemerkt und die Tätigkeiten des Heizelementes 22 und/oder der Reinigungsvorrichtung 35 beobachtet werden. Ferner ist in dieser Figur verdeutlicht, dass die Ablaufrinne 33 im Querschnitt gebogen ausgeführt ist. Weiterhin ist neben dem Temperatursensor 34 noch ein Drucksensor 38 zu erkennen, welcher ebenfalls die Decke des Ablaufes 4 bzw. den Deckel 42 durchgreift und so in der Lage ist, den Gasdruck in dem Ablaufkanal 19 zu erfassen. In Fig. 4 ist außerdem noch der Siphon 13 ersichtlich. Hierbei fällt der Blick auf die Deckenwand 44 mit dem Tauchabschnitt 45 und dem Gastrennabschnitt 46. Außerdem ist der obere Rand der Überlaufwand 47 aufgrund der Verdeckung durch die Deckenwand 44 gestrichelt angedeutet.

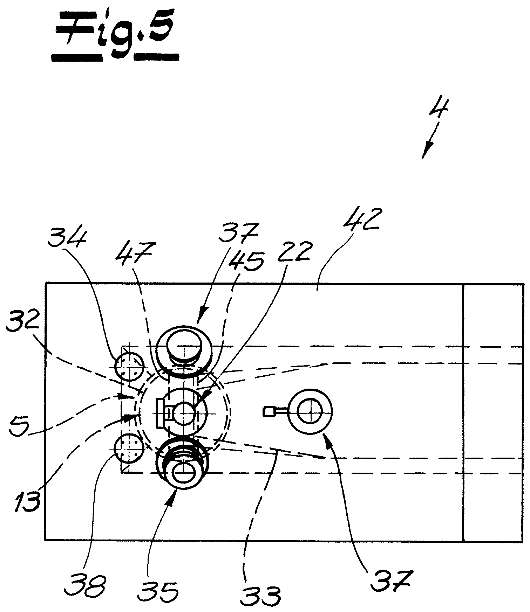

In Fig. 5 schließlich ist der Ablauf 4 in einer Draufsicht abgebildet. Besonders gut zu erkennen ist in dieser Figur, wie am Deckel 42 das Heizelement 22, die Reinigungsvorrichtung 35, die erste und zweite Schauöffnung 37, der Temperatursensor 34 sowie der Drucksensor 38 zueinander angeordnet sind. Ferner ist ersichtlich, dass sich die Ablaufrinne 33 in Richtung des Ablaufkanalendes 5 hin verjüngt und dass der Siphon 13 dieses Ausführungsbeispiels im Querschnitt kreisrund ausgebildet ist. Die Überlaufwand 47 und der Tauchabschnitt 45 der Deckenwand 44 sind gestrichelt angedeutet.

## Patentansprüche

1. Vorrichtung zum Abzug von flüssigem Salz, insbesondere für Anlagen zur Reinigung von Abwässern, mit einem Heizraum (1), wobei der Heizraum (1) Heizraumwände (21) besitzt, wobei der Heizraum (1) einen Eingang (2) zur Einführung eines salzhaltigen Stoffes (3) aufweist, wobei der Heizraum (1) mit einem Ablauf (4) für eine Salzschmelze (17) verbunden ist, wobei der Ablauf (4) einen Ablaufkanal (19) und ein Ablaufkanalende (5) aufweist, wobei flussabwärts des Ablaufkanalendes (5) ein Kühlbereich (23) zum Kühlen der Salzschmelze (17) vorgesehen ist, wobei der Ablaufkanal (19) wenigstens entlang eines Abschnittes von einer Ablaufwand (14) umlaufend umschlossen ist, wobei der Ablauf (4) ein Heizelement (22) aufweist, wobei wenigstens eine oder mehrere der Heizraumwände (21) Wandrohre (15) aufweist bzw. aufweisen,
**dadurch gekennzeichnet, dass**
der Heizraum (1) einen Heizraumbrenner (9) aufweist.

2. Vorrichtung nach Anspruch 1, wobei der Ablauf (4) eine Ablaufrinne (33) aufweist.

3. Vorrichtung nach Anspruch 1 oder 2, wobei der Ablauf (4) so ausgebildet ist, dass innerhalb des Ablaufkanales (19) und unterhalb der im Ablaufkanal (19) fließenden Salzschmelze (17) ein von dem Heizelement (22) ausgehendes erhitztes Gas strömen kann.

4. Vorrichtung nach einem der Ansprüche 1 bis 3, wobei der Ablauf (4) bzw. der Ablaufkanal (19) bzw. das Ablaufkanalende (5) einen Siphon (13) zur Vermeidung eines Außenlufteintrittes in den Ablaufkanal (19) aufweist.

5. Vorrichtung nach einem der Ansprüche 1 bis 4, wobei die Ablaufwand (14) eine keramische Schicht (28) umfasst.

6. Vorrichtung nach einem der Ansprüche 1 bis 5, wobei das Ablaufkanalende (5) eine Fallöffnung aufweist.

7. Vorrichtung nach einem der Ansprüche 1 bis 6, wobei der Ablauf (4) an einer seitlichen Heizraumwand (21) des Heizraumes (1) angeordnet ist.

8. Vorrichtung nach einem der Ansprüche 1 bis 7, wobei der Ablauf (4) wenigstens eine Schauöffnung (37) aufweist.

9. Vorrichtung nach einem der Ansprüche 1 bis 8, wobei der Ablauf (4) einen abnehmbaren Deckel (42) umfasst.

10. Vorrichtung nach einem der Ansprüche 1 bis 9, wobei der Ablauf (4) wenigstens einen Temperatursensor (34) aufweist.

11. Vorrichtung nach einem der Ansprüche 1 bis 10, wobei der Ablauf (4) eine Reinigungsvorrichtung (35) umfasst.

12. Vorrichtung nach einem der Ansprüche 1 bis 11, wobei unterhalb des Ablaufkanalendes (5) eine Fördereinrichtung (6) angeordnet ist, so dass die Salzschmelze (17) auf die Fördereinrichtung (6) fallen kann.

13. Verfahren zum Abzug von flüssigem Salz mit einer Vorrichtung gemäß einem der Ansprüche 1 bis 12, wobei eine Salzschmelze (17) entlang eines Ablaufkanals (19) eines Ablaufes (4) bis zu einem Ablaufkanalende (5) des Ablaufes (4) fließt, wobei der Ablauf (4) mit einem Heizraum (1) verbunden ist, wobei der Heizraum (1) Heizraumwände (21) besitzt, wobei stromabwärts des Ablaufkanalendes (5) die Salzschmelze (17) in einem Kühlbereich (23) bis wenigstens zur Erstarrung gekühlt wird, wobei der Ablauf (4) ein Heizelement (22) aufweist, wobei das Heizelement (22) zur Vermeidung von Salzablagerungen dem Ablaufkanal (19) Wärme zuführt, wobeiwenigstens eine oder mehrere der Heizraumwände (21) Wandrohre (15) aufweist bzw. aufweisen.

14. Verfahren nach Anspruch 13, wobei die Salzschmelze (17) im Ablaufkanal (19) entlang einer Ablaufrinne (33) geführt wird, wobei die Ablaufrinne (33) zumindest entlang eines Abschnittes vollumfänglich von einem durch das Heizelement (22) erhitzten Gas umspült wird.

## Claims

1. Apparatus for extracting molten salt, in particular for plants for purifying waste water, with a heating chamber (1), wherein the heating chamber (1) has heating chamber walls (21), wherein the heating chamber (1) has an inlet (2) for introducing a salt-containing substance (3), wherein the heating chamber (1) is connected to an outlet (4) for a molten salt (17), wherein the outlet (4) has an outlet passage (19) and an outlet passage end (5), wherein a cooling station (23) is provided downstream of the outlet passage end (5) for cooling the molten salt (17), wherein the outlet passage (19) is peripherally enclosed along at least a section by an outlet wall (14) extending around it, wherein the outlet (4) has a heating element (22), wherein at least one or more of the heating chamber walls (21) have wall tubes (15),
**characterized in that**
the heating chamber (1) has a heating chamber burner (9).

2. Apparatus according to claim 1, wherein the outlet (4) comprises an outlet groove (33).

3. Apparatus according to claim 1 or 2, wherein the outlet (4) is designed such a way that within the outlet passage (19) and below the molten salt (17) flowing in the outlet passage (19), a heated gas emanating from the heating element (22) can flow.

4. Apparatus according to one of claims 1 to 3, wherein the outlet (4) or the outlet passage (19) or the passage end (5) has a trap (13) to prevent outside air from entering the outlet passage (19).

5. Apparatus according to one of claims 1 to 4, wherein the outlet wall (14) comprises a ceramic layer (28).

6. Apparatus according to one of claims 1 to 5, wherein the outlet passage end (5) has a drop opening.

7. Apparatus according to one of claims 1 to 6, wherein the outlet (4) is arranged on a lateral heating chamber wall (21) of the heating chamber (1).

8. Apparatus according to one of claims 1 to 7, wherein the outlet (4) has at least one viewing opening (37).

9. Apparatus according to one of claims 1 to 8, wherein the outlet (4) comprises a removable lid (42).

10. Apparatus according to one of claims 1 to 9, wherein the outlet (4) has at least one temperature sensor (34).

11. Apparatus according to one of claims 1 to 10, wherein the outlet (4) comprises a cleaning device (35).

12. Apparatus according to one of claims 1 to 11, wherein a conveyor device (6) is arranged below the outlet passage end (5) so that the molten salt (17) can fall onto the conveyor device (6).

13. Method for removing molten salt using an apparatus according to any one of claims 1 to 12, wherein molten salt (17) flows along an outlet passage (19) of an outlet (4) to an outlet passage end (5) of the outlet (4), wherein the outlet (4) is connected to a heating chamber (1), wherein the heating chamber (1) has heating chamber walls (21), wherein downstream of the outlet passage end (5) the molten salt (17) is cooled in a cooling station (23) to at least solidification, wherein the outlet (4) has a heating element (22), wherein the heating element (22) supplies heat to the outlet passage (19) to prevent salt deposits, wherein at least one or more of the heating chamber walls (21) have wall tubes (15).

14. Method according to claim 13, wherein the molten salt (17) is guided in the outlet passage (19) along an outlet groove (33), wherein the outlet groove (33) is completely surrounded, at least along a section, by a gas heated by the heating element (22).

## Revendications

1. Dispositif, destiné à extraire du sel liquide, notamment pour des installations d'épuration des eaux usées, pourvu d'un espace de chauffage (1), l'espace de chauffage (1) possédant des parois (21) d'espace de chauffage, l'espace de chauffage (1) comportant une entrée (2) pour l'introduction d'une matière (3) contenant du sel, l'espace de chauffage (1) étant relié avec une évacuation (4) pour du sel fondu (17), l'évacuation (4) comportant une conduite d'évacuation (19) et une extrémité (5) de conduite d'évacuation, en aval de l'extrémité (5) de conduite d'évacuation étant prévue une zone de refroidissement (23), destinée à refroidir le sel fondu (17), la conduite d'évacuation (19) étant entourée de manière circonférentielle, le long d'au moins un segment par une paroi d'évacuation (14), l'évacuation (4) comportant un élément chauffant (22),
au moins une ou plusieurs des parois (21) d'espace de chauffage comportant des tubes muraux (15),
**caractérisé en ce que**
l'espace de chauffage (1) comporte un brûleur (9) d'espace de chauffage.

2. Dispositif selon la revendication 1, l'évacuation (4) comportant une goulotte d'évacuation (33).

3. Dispositif selon la revendication 1 ou 2, l'évacuation (4) étant conçue de sorte qu'à l'intérieur de la conduite d'évacuation (19) et en dessous du sel fondu (17) s'écoulant dans la conduite d'évacuation (19) puisse circuler un gaz chauffé, partant de l'élément chauffant (22).

4. Dispositif selon l'une quelconque des revendications 1 à 3, l'évacuation (4) ou la conduite d'évacuation (19) ou l'extrémité (5) de conduite d'évacuation comportant un siphon (13), destiné à éviter une entrée d'air extérieur dans la conduite d'évacuation (19).

5. Dispositif selon l'une quelconque des revendications 1 à 4, la paroi d'évacuation (14) comprenant une couche céramique (28).

6. Dispositif selon l'une quelconque des revendications 1 à 5, l'extrémité (5) de conduite d'évacuation comportant un orifice d'éjection.

7. Dispositif selon l'une quelconque des revendications 1 à 6, l'évacuation (4) étant placée sur une paroi latérale (21) d'espace de chauffage de l'espace de chauffage (1).

8. Dispositif selon l'une quelconque des revendications 1 à 7, l'évacuation (4) comportant au moins un regard (37).

9. Dispositif selon l'une quelconque des revendications 1 à 8, l'évacuation (4) comprenant un couvercle (42) amovible.

10. Dispositif selon l'une quelconque des revendications 1 à 9, l'évacuation (4) comportant au moins un capteur de température (34).

11. Dispositif selon l'une quelconque des revendications 1 à 10, l'évacuation (4) comprenant un dispositif de nettoyage (35).

12. Dispositif selon l'une quelconque des revendications 1 à 11, en-dessous de l'extrémité (5) de conduite d'évacuation étant placé un système de convoyage (6), de sorte que le sel fondu (17) puisse tomber sur le système de convoyage (6).

13. Procédé, destiné à extraire du sel liquide à l'aide d'un dispositif selon l'une quelconque des revendications 1 à 12, du sel fondu (17) s'écoulant le long d'une conduite d'évacuation (19) d'une évacuation (4) jusqu'à une extrémité (5) de conduite d'évacuation de l'évacuation (4), l'évacuation (4) étant reliée avec un espace de chauffage (1), l'espace de chauffage (1) possédant des parois (21) d'espace de chauffage, en aval de l'extrémité (5) de conduite d'évacuation, le sel fondu (17) étant refroidi dans une zone de refroidissement (23) au moins jusqu'à solidification, l'évacuation (4) comportant un élément chauffant (22), pour éviter des dépôts de sel, l'élément chauffant (22) alimentant de la chaleur vers la conduite d'évacuation (19), au moins une ou plusieurs des parois (21) d'espace de chauffage comportant des tubes muraux (15).

14. Procédé selon la revendication 13, le sel fondu (17) étant guidé dans la conduite d'évacuation (19) le long d'une goulotte d'évacuation (33), au moins le long d'un segment, la goulotte d'évacuation (33) étant baignée sur toute sa circonférence dans un gaz chauffé par l'élément chauffant (22).
